# EUROPÄISCHE PATENTSCHRIFT

(11) **EP 1 323 985 B1**
(45) Veröffentlichungstag und Bekanntmachung des Hinweises auf die Patenterteilung: **09.02.2011**
(21) Anmeldenummer: 02027717.4
(22) Anmeldetag: 11.12.2002
(51) Int. Cl.: F24D 19/10, F04D 15/00

(54) **Verfahren zur Ermittlung einer Durchflusssperre in einem Rohrsystem**
Method for detecting a non return valve in a pipe system
Procédé pour déterminer un clapet antiretour dans un système de tubes

(30) Priorität: 24.12.2001 DE 10163988
(43) Veröffentlichungstag der Anmeldung: 02.07.2003
(73) Patentinhaber: GRUNDFOS A/S, DK-8850 Bjerringbro (DK)
(72) Erfinder: Skovmose Kallesoe, Carsten, 880 Viborg (DK); Vadstrup, Pierrre, 8381 Tilst (DK); Olsen, Erik, 8850 Bjerringbro (DK); Brath, Per, 8900 Randers (DK)
(74) Vertreter: Vollmann, Heiko

(56) Entgegenhaltungen:
- EP-A- 1 072 795
- DE-A- 19 931 135
- DE-U- 29 610 050

## Beschreibung

Die Erfindung betrifft ein Verfahren zum Steuern einer drehzahlregelbaren Pumpe, insbesondere in einer Heizungsanlage sowie eine Pumpe, insbesondere Heizungsumwälzpumpe mit einer entsprechenden Steuerung/Regelung.

In modernen Heizungsanlagen wird die zur Raumheizung benötigte Wärme mittels Wasser transportiert, das mittels einer Heizungsumwälzpumpe in einem Kreislauf gefördert wird, in dem Wärme von einem Primärvvärmetauscher einerseits zugeführt und in Heizkörpern, Heizschlangen oder dergleichen zum Zwecke der Raumheizung abgegeben wird. Um zu verhindern, dass auch dann, wenn raumseitig keine Wärme benötigt wird, d. h. die üblicherweise vorhandenen Thermostatventile geschlossen sind, warmes Wasser in den Leitungen vom Primärwärmetauscher ausgehend aufsteigt, zählt es zum Stand der Technik, eine Durchflusssperre vorzusehen. Diese besteht in der Regel aus einem federkraftbeaufschlagten Rückschlagventil, das, einerseits den Durchfluss inner halb des Heizkreislaufes nur in eine Richtung zulässt und andererseits einen gewissen Mindestförderdruck benötigt um den Durchfluss freizugeben. Derartige Durchflusssperren sind auch unter dem Begriff Schwerkraftbremse bekannt (DE 199 31 135 A1).

Moderne drehzahlgeregelte Heizungsumwälzpumpen sind kennfeldgesteuert, d. h. sie können in einem vorgegebenen Kennfeld, das beispielsweise durch die maximale Drehzahl festgelegte Maximalkurve nach oben hin begrenzt ist, in jedem beliebigen Punkt dieses Kennfeldes gefahren werden, üblicherweise auf einer Regelkurve. Um sicherzustellen, dass die Heizungsumwälzpumpe auch bei Heizungsanlagen arbeitet, welche die vorbeschriebene Durchflusssperre aufweisen, zählt es zum Stand der Technik, das Kennfeld auch nach unten hin durch eine sogenannte Minimalkurve zu begrenzen, um sicherzustellen, dass die Heizungsumwälzpumpe nur in den Bereichen betrieben wird, in denen die ggf. vorhandene Durchflusssperre überwunden und somit auch Flüssigkeit gefördert wird. Durch diese Minimalkurve wird allerdings ein Drehzahlbereich der Pumpe im unteren Teillastbereich abgeschnitten, was dazu führen kann, dass die Pumpe in diesem Bereich mit einer Leistung betrieben wird, die höher ist als die für den Wärmebedarf der Anlage eigentlich erforderliche Pumpleistung. Dies ist umso nachteiliger, als moderne drehzahlgeregelte Permanentmagnetmotoren auch im unteren Drehzahlbereich mit einem vergleichsweise hohen Wirkungsgrad arbeiten.

Aus EP 1 072 795 A1 ist es bekannt mit Hilfe eines externen Computers Betriebsdaten der Heizungsumwälzpumpe, und zwar sowohl die elektrischen als auch die hydraulischen Daten zu erfassen, um festzustellen, in welchen Betriebspunkten die Pumpe energetisch günstig betrieben werden kann und in welchen nicht.

Vor diesem Hintergrund liegt der vorliegenden Erfindung die Aufgabe zugrunde, ein Verfahren zum Steuern einer drehzahlregelbaren Pumpe, insbesondere für eine Heizungsanlage zu schaffen, mit dem ohne äußere Eingriffe in die Heizungsanlage das Vorhandensein einer Durchflusssperre ermittelt und das Kennfeld der Pumpen Steuerung/Regelung entsprechend angepasst werden kann sowie darüber hinaus eine elektromotorisch angetriebene Pumpe mit einer Steuer- und Regelelektronik zu schaffen, die ein solches Verfahren nach Möglichkeit selbsttätig ausführt, um die Pumpe auch in diesen niedrigen Drehzahlbereich energetisch günstig fahren zu können.

Diese Aufgabe wird, soweit es den verfahrensmäßigen Teil angeht, durch die Verfahren gemäß Anspruch 1 und 2 gelöst, der vorrichtungsmäßige Aufbau einer solchen Pumpe, insbesondere einer Heizungsumwälzpumpe ist durch die Merkmale des Anspruchs 6 definiert. Vorteilhafte Ausgestaltungen des efindungsgemäßen Verfahrens sowie der erfindungsgemäßen Pumpe sind in den Unteransprüchen sowie der nachfolgenden Beschreibung angegeben.

Grundgedanke der vorliegenden Erfindung ist es, durch gezielte Ansteuerung der Pumpe und Ermittlung der sich dann einstellenden Betriebspunkte (Förderdruck und Fördermenge) zunächst zu ermitteln, ob eine Durchflusssperre im System vorhanden ist, um die Pumpensteuerung/-regelung, insbesondere hinsichtlich des Kennfeldes anzupassen, d. h., bei Ermittlung des Nichtvorhandenseins einer solchen Durchflusssperre das Kennfeld nach unten hin nicht oder nur minimal zu begrenzen und bei Ermittlung des Vorhandenseins einer solchen Durchflusssperre die Minimalkurve, d. h. die Begrenzung des Kennfeldes, nach unten so zu legen, dass das Kennfeld nur soweit wie unbedingt notwendig nach unten hin begrenzt wird, also nur soweit, dass die Durchflusssperre gerade überwunden wird. Hierdurch wird es möglich, die Pumpe anlagengerecht und energetisch günstig zu betreiben, insbesondere im unteren und untersten Drehzahlbereich, ohne dass die Gefahr einer Unterversorgung der Heizungsanlage wegen Nichtförderung besteht.

Das erfindungsgemäße Verfahren sowie die erfindungsgemäße Pumpe sind nicht auf die Anwendung in Heizungsanlagen beschränkt, sondern können auch in anderen Rohrsystemen oder Leitungssystemen eingesetzt werden, um sicherzustellen, dass die Pumpe nicht mit Drehzahlen betrieben wird, in denen keine Förderung erfolgt, sei es aufgrund des Rohmetzwiderstandes, einer Durchflusssperre oder eines sonstigen hydraulischen Hindernisses.

Gemäß der Erfindung kann die Ermittlung einer Durchflusssperre auf unterschiedlichen Wegen erfolgen. So kann diese durch langsames Absenken der Drehzahl des Pumpenaggregates bis auf Null bzw. nahe Null und gleichzeitiger Kontrolle des Durchflusses ermittelt werden oder durch Anheben der Drehzahl von Null bzw. nahe Null an ansteigend, ebenfalls unter Kontrolle des Durchflusses. Dabei wird, sofern keine Durchflusssperre innerhalb der Heizungsanlage vorgesehen ist, sich ein Durchfluss unmittelbar nach Anfahren der Pumpe ergeben oder beim Absenken der Drehzahl bis nahezu Null. Wird jedoch ab einer bestimmten Drehzahl oder bis zu einer bestimmten Drehzahl kein Durchfluss ermittelt, so ist dies ein Zeichen für das Vorhandensein einer Durchflusssperre. Eine solche Durchflusssperre öffnet typischerweise nachdem sich ein Druck eingestellt hat, der etwa dem durch Federkraft aufgebrachten Gegendruck des Ventilkörpers entspricht. Es versteht sich, dass beim Arbeiten mit abfallender Drehzahl, dann, wenn kein Durchfluss mehr detektiert wird, die Drehzahl nicht weiter bis auf Null oder bis nahe auf Null abgesenkt zu werden braucht, das Verfahren kann dann beendet werden. Auch ist nicht zwingend erforderlich von der Drehzahl Null an hochzufahren, es genügt eine Drehzahl nahe Null, die zweckmäßigerweise so gewählt wird, dass der Anfahrwiderstand der Pumpe zuverlässig überwunden wird. Unter nahe Null im Sinne der Erfindung ist daher eine solche zweckmäßigerweise zu wählende Drehzahl im unteren bis untersten Drehzahlbereich zu verstehen.

Für das vorbeschriebene Verfahren ist es erforderlich, die Pumpe bis nahe zur Drehzahl Null zu fahren oder umgekehrt vom ausgeschalteten Zustand an langsam hoch zu fahren. Dies ist nicht erforderlich bei einem alternativen Verfahren, bei dem die Pumpe mit zwei unterschiedlichen Drehzahlen angesteuert wird, wobei anhand des ermittelten Durchflußes und der Drehzahl der jeweilige aktuelle Betriebspunkt ermittelt wird. Anhand dieser mindestens zwei ermittelten Betriebspunkte wird dann eine Rohrnetzkennlinie berechnet. Diese berechnete aktuelle Rohrnetzkennlinie der Heizungsanlage wird, wenn eine Durchflußsperre nicht vorhanden ist, etwa im Nullpunkt des H-Q-Diagramms beginnen, wohingegen beim Vorhandensein einer Durchflußsperre diese Rohrnetzkennlinie entsprechend nach oben verschoben sein wird, zumindest einen von Null abweichenden Nulldurchgang auf der Ordinate haben wird.

Insbesondere beim letztgenannten Verfahren, bei dem die Durchflußsperre nicht unmittelbar, sondern über eine ermittelte Rohrnetzkennlinie berechnet wird, die anhand zuvor ermittelter Betriebspunkte bestimmt wird, ist es wichtig, vor und nach Abschluss des Verfahrens den aktuellen Betriebspunkt der Pumpe zu erfassen und diese Betriebspunkte miteinander zu vergleichen. Stellt sich dabei heraus, dass die Betriebspunkte nicht mehr übereinstimmen, so ist das Verfahren zweckmäßigerweise zu wiederholen, da die ermittelte Rohrnetzkennlinie dann möglicherweise mit erhöhter Toleranz behaftet sein kann aufgrund der zwischenzeitlich erfolgten Betriebspunktverschiebung. Stimmen die Betriebspunkte hingegen überein, so kann davon ausgegangen werden, dass die bestimmte Rohrnetzkennlinie zuverlässig in einen bestimmten Toleranzbereich liegt.

Ungeachtet des Verfahrens, das zur Ermittlung der Durchflußsperre eingesetzt wird, kann dieses selbsttätig von der Pumpensteuerung durchgeführt werden. Moderne drehzahlgeregelte Heizungsumwälzpumpen haben regelmäßig eine digitale Steuer- und Regelelektronik für den Drehzahlsteller, in der das erfindungsgemäße Verfahren ohne weiteres softwaremäßig implementiert werden kann. Dabei wird zweckmäßigerweise nicht nur das Vorhandensein oder Nichtvorhandensein einer Durchflußsperre detektiert werden, sondern darüber hinaus auch die Größe der Durchflußsperre, d.h. der Gegendruck der aufgebaut werden muss, um diese zu überwinden. Das Kennfeld der Pumpe wird dann nach unten hin nur soweit wie anlagentechnisch notwendig begrenzt, so dass das Pumpenaggregat auch bei vorhandener Durchflußsperre noch in einem sehr niedrigen Drehzahlbereich und damit energetisch wirtschaftlich gefahren werden kann.

Da dieser Vorgang zur Ermittlung dieser Durchflußsperre grundsätzlich nur einmal, nämlich nach Einbau des Pumpenaggregats in die Heizungsanlage erforderlich ist, kann es zweckmäßig sein, dieses Verfahren pumpenseitig nur nach Erhalt eines externen Befehls, sei es durch Betätigung eines Schalters oder einer Fernbedienung ablaufen zu lassen. Ein solcher Schalter wird zweckmäßigerweise so angeordnet, dass er nur für den Fachmann nach dem Einbau zugängig ist, also beispielsweise innerhalb des Klemmenkastens, und im normalen Betrieb nicht zugängig ist. Dies kann auch durch die bei Pumpenaggregaten dieser Art gegebenenfalls vorhandenen funk- oder lichtgebundenen Fernbedienungen erfolgen. Ist das Pumpenaggregat hingegen auch für den Einbau durch ungeschultes Personal vorgesehen, dann kann es zweckmäßig sein, diesen Vorgang zeitgesteuert nach dem Einschalten des Pumpenaggregats selbsttätig erfolgen zu lassen, was allerdings bedingt, dass nach jedem Einschalten der Pumpe das Verfahren zur Ermittlung einer Durchflußsperre erneut aktiviert wird. Den Vorgang zeitgesteuert nach dem Einschalten des Pumpenaggregats selbsttätig erfolgen zu lassen wird insbesondere auch für die Pumpenanwendungen zweckmäßig sein, die sich nicht auf Heizungskreisläufe beziehen oder die Kreislauf frei arbeiten.

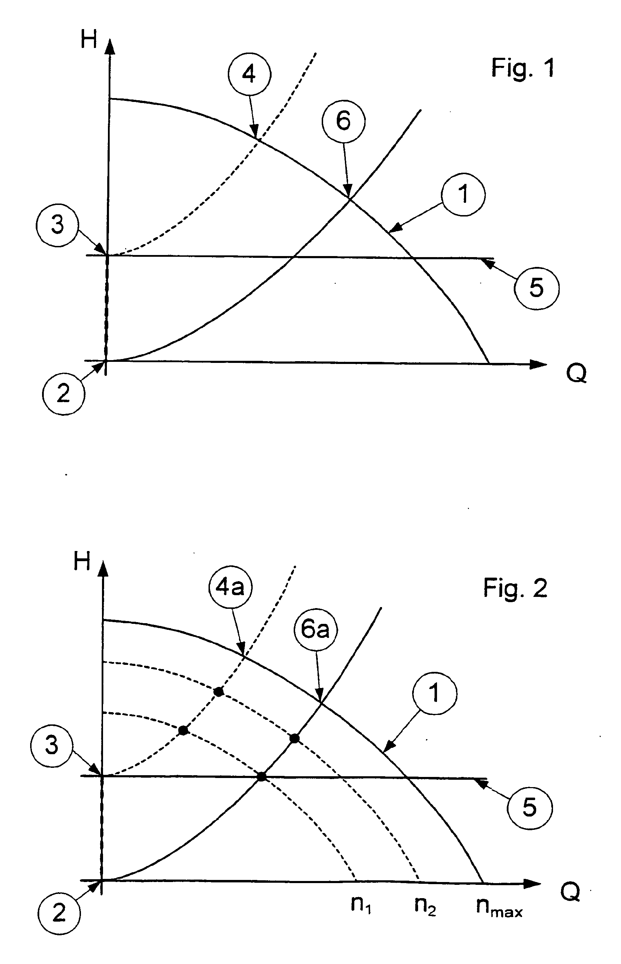

Die Erfindung ist nachfolgend anhand zweier Ausführungsbeispiele für Heizungsanlagen erläutert, wobei anhand der Figuren 1 und 2, welche H-Q-Diagramme darstellen, die alternativen Verfahren zur Ermittlung der Durchflußsperre beschrieben sind.

In den H-Q-Diagrammen, bei denen über der Ordinate der Förderdruck H und über der Abszisse die Fördermenge Q aufgetragen ist, ist mit 1 jeweils die Maximalkurve des Leistungsfeldes der Pumpe dargestellt. Diese Maximalkurve 1 kennzeichnet die maximal mögliche Leistung der Pumpe, die sich bei maximaler Drehzahl einstellt. Unterhalb dieser Kurve ist die Pumpe in jedem beliebigen Punkt des Kennfeldes fahrbar, wobei üblicherweise eine Regelkurve vorgesehen ist, welche die möglichen Betriebspunkte definiert.

Um zu ermitteln, ob in der Anlage eine Durchflußsperre vorhanden ist oder nicht, wird das Pumpenaggregat gemäß Fig. 1 beginnend mit der Drehzahl Null angefahren. Da die Drehzahl aggregatseitig innerhalb derSteuerung/Regelung als elektrisches Signal ohnehin zur Verfügung steht, wird lediglich zur Bestimmung des Betriebspunktes eine Angabe über Fördermenge oder Förderhöhe benötigt. Das hier beispielhaft beschriebende Aggregat weist hierzu einen Durchflußmesser auf. Beginnend bei der Drehzahl Null im Punkt 2, also im Schnittpunkt von Ordinate und Abszisse wird nun die Drehzahl des Pumpenaggregats erhöht. Wenn die Anlage eine Durchflußsperre aufweist, ergeben sich Betriebspunkte auf oder unmittelbar neben der Ordinate, da wegen der Durchflußsperre zunächst ein Durchfluß nicht stattfindet. Wenn mit steigender Drehzahl die Durchflußsperre überwunden wird, stellt sich nach Überschreiten dieses Drucks im Punkt 3 dann langsam ansteigend ein Durchfluß ein, bis schließlich die Maximalkurve 1 erreicht ist. Diese durch unterbrochene Linie dargestellte Kurve 4 in Fig. 1 erhält man auch, wenn man das Aggregat in umgekehrter Richtung ansteuert, d.h. mit abfallender Drehzahl bis zum Punkt 3 und dann zum Nullpunkt 2. Entsprechend dem für die Überwindung der Durchflußsperre ermittelten Gegendruck im Punkt 3 wird dann in diesem Punkt oder kurz darüber, dass Kennfeld durch eine Minimalkurve 5 (parallel zur Abszisse) nach unten hin begrenzt. Hierdurch wird sicher gestellt, dass das Aggregat nur in den Bereichen gefahren wird, in denen auch eine Förderung erfolgt. Andererseits kann aufgrund des anlagenspezifisch ermittelten Punktes 3 diese Kurve 5 so niedrig wie irgend möglich gelegt werden, so dass das Aggregat auch in energetisch günstigen Bereichen unmittelbar oberhalb der Minimalkurve 5, also des für die Überwindung der Durchflußsperre erforderlichen Drucks, betrieben werden kann.

Wird hingegen keine Durchflußsperre detektiert, so ergibt sich mit von Null ansteigender Drehzahl bis zur Maximaldrehzahl auf der Maximalkurve 4 die in Fig. 1 in durchgezogener Linie dargestellte Kurve 6. Bei Ermittlung einer solchen Kurve ist eine Begrenzung des Regelfeldes nach unten nicht erforderlich, die Pumpe kann also bis nahe zur Drehzahl Null gefahren werden.

In Fig. 2 wird die selbe Heizungsanlage wie sie anhand von Fig. 1 beschrieben wurde, analysiert, und zwar indem das Pumpenaggregat nacheinander folgend mit zwei unterschiedlichen Drehzahlen, nämlich n₁ und n₂ angesteuert wird. Die sich aus den jeweiligen Betriebspunkten ergebene Rohrnetzkennlinie wird in der Steuerung/Regelung der Pumpe rechnerisch ermittelt, so dass sich beim Vorhandensein einer Durchflußsperre die Rohrnetzkennlinie 4a und bei Nichtvorhandensein die Rohrnetzkennlinie 6a ergibt. Anhand des Schnittpunktes der Rohrnetzkennlinie 4a mit der Ordinate (dies ist der Punkt 3 bei Kurve 4a) wird die Minimalkurve 5 festgelegt, welche das Kennfeld auch hier nach unten begrenzt. Die gegenüber der Rohrnetzkennlinie 6a nach oben verschobene Rohrnetzkennlinie 4a schneidet die Ordinate im Punkt 3, also mit deutlichem Abstand über dem Nullpunkt 2, wodurch das Vorhandensein einer Durchflußsperre festgestellt ist und auch deren Größe bzw. der Druck zu deren Überwindung. Ist eine solche Durchflußsperre hingegen nicht vorhanden, so ergibt sich bei gleicher Drehzahlsteuerung (n₁ und n₂) eine Rohrnetzkennlinie 6a, die etwa durch den Nullpunkt 2 verläuft. In diesem Fall ist eine Begrenzung des Leistungsfeldes nach unten nicht erforderlich.

Bei dem anhand von Fig. 2 beschriebenen Verfahren wird vor und nach dem Verfahren der aktuelle Betriebspunkt der Pumpe im H-Q-Diagramm ermittelt und verglichen. Nurwenn die ermittelten Betriebspunkte übereinstimmen erfolgt die gegebenenfalls vorzunehmende Begrenzung des Leistungsfeldes nach unten hin. Ist dies nicht der Fall, wird das Verfahren noch einmal wiederholt um betriebsbedingte Einflüsse, die durch Änderung des Betriebspunktes während des Verfahrens auftreten, auszuschließen

Es versteht sich, dass im Fall einer rechnerischen Ermittlung der Rohrnetzkennlinie in Abhängigkeit der Anzahl der in diesem Zusammenhang angefahrenen Betriebspunkte die Genauigkeit des Punktes 3 unterschiedlich toleranzbehaftet sein kann. Diese Toleranz ist bei der Festlegung der Minimalkurve entsprechend zu berücksichtigen um sicher zu stellen, dass das Leistungsfeld der Pumpe so begrenzt ist, dass in jedem Punkt ein Durchfluß und somit eine Förderung erfolgt.

Es sei an dieser Stelle nochmals darauf hingewiesen, dass die Durchflußmessung nicht zwingend über einen Durchflußmesser erfolgen muss, sondern dass diese Werte auch indirekt aus elektrischen Werten (Drehzahl und Leistungsaufnahme des Motors) bestimmt werden können, wie dies an sich bekannt ist.

## Patentansprüche

1. Verfahren zum Steuern einer drehzahlregelbaren Pumpe, bei dem die Pumpe mit von nahe Null oder Null steigender oder auf nahe Null oder Null fallender Drehzahl angesteuert wird und bei dem gleichzeitig ermittelt wird, ob ein Durchfluss erfolgt oder nicht, und bei dem der Drehzahlbereich, in dem kein Durchfluss festgestellt wird, in der Steuerung/Regelung der Pumpe gesperrt wird.

2. Verfahren zum Steuern einer drehzahlregelbaren Pumpe, bei dem die Pumpe nachfolgend mit mindestens zwei von Null abweichenden Drehzahlen angesteuert wird, und bei dem anhand der sich bei der jeweiligen Drehzahl einstellenden und durch Förderdruck und Fördermenge bestimmten Betriebspunkte eine Rohr netzkennlinie der Anlage bestimmt wird, wonach anhand des Verlaufs der Rohmetzkennlinie das Vorhandensein einer Durchflusssperre ermittelt und der Drehzahlbereich in der Steuerung/Regelung der Pumpe gesperrt wird, bei dem entsprechend dieser ermittelten Rohmetzkennlinie eine Flüssigkeitsförderung durch die Anlage nicht zu erwarten ist.

3. Verfahren nach einem der vorhergehenden Ansprüche, **dadurch gekennzeichnet, dass** vor und nach Durchführung des Verfahrens der aktuelle Betriebspunkt der Pumpe ermittelt wird, und die Betriebspunkte vor und nach dem Verfahren verglichen werden und dass bei Abweichung der Betriebspunkte das Verfahren wiederholt wird.

4. Verfahren nach einem der vorhergehenden Ansprüche, **dadurch gekennzeichnet, dass** es selbsttätig vorzugsweise zeitgesteuert nach dem Einschalten des Aggregats erfolgt.

5. Verfahren nach einem der vorhergehenden Ansprüche, **dadurch gekennzeichnet, dass** es durch externen Eingriff gestartet wird.

6. Elektromotorisch angetriebene Pumpe mit einer Steuer- und Regelelektronik, **dadurch gekennzeichnet, dass** die Steuer- und Regelelektronik so ausgebildet ist, dass die Pumpe zur Ermittlung einer Durchflusssperre nach einem Verfahren nach einem der vorhergehenden Ansprüche angesteuert wird und dass der Drehzahlbereich, in dem kein Durchfluss festgestellt oder zu erwarten sein wird, in der Steuerung/Regelung der Pumpe selbsttätig gesperrt wird.

7. Pumpe nach Anspruch 6, **dadurch gekennzeichnet, dass** die Steuer- und Regelelektronik so ausgebildet ist, dass die Pumpe zur Ermittlung einer Durchflusssperre mit von nahe Null steigender oder auf nahe Null fallender Drehzahl angesteuert wird und dass gleichzeitig ermittelt wird, ob ein Durchfluss erfolgt oder nicht, und dass der Drehzahlbereich, in dem kein Durchfluss festgestellt wird, in der Steuerung/Regelung der Pumpe selbsttätig gesperrt wird.

8. Pumpe nach Anspruch 6, **dadurch gekennzeichnet, dass** die Steuer- und Regelelektronik so ausgebildet ist, dass die Pumpe zur Ermittlung einer Durchflusssperre nachfolgend mit mindestens zwei von Null abweichenden Drehzahlen angesteuert wird, und dass anhand der sich bei der jeweiligen Drehzahl einstellenden und durch Förderdruck und Fördermenge bestimmten Betriebspunkte eine Rohmetzkennlinie der Anlage bestimmt wird, wonach anhand des Verlaufs der Rohmetzkennlinie das Vorhandensein einer Durchflusssperre ermittelt und der Drehzahlbereich in der Steuerung/Regelung der Pumpe gesperrt wird, bei dem entsprechend dieser ermittelten Rohmetzkennlinie eine Flüssigkeitsförderung durch die Anlage nicht zu erwarten ist.

## Claims

1. A method for controlling a pump which may be controlled with a closed loop with regard to its rotational speed, with which the pump is activated with a rotational speed increasing from close to zero or from zero or falling to close to zero or to zero, and with which one simultaneously determines whether a throughput is effected or not, and with which the rotational speed range in which no throughput is ascertained, is blocked in the control/closed-loop control of the pump.

2. A method for controlling a pump which may be controlled with a closed loop with regard to its rotational speed, with which the pump is successively activated with at least two rotational speeds which are different from zero, and with which a pipe network characteristic curve of the installation is determined by way of the operating points which set in at the respective rotational speed and which are determined by the delivery pressure and the delivery quantity, whereupon the presence of a throughput block is determined by way of the course of the pipe network characteristic curve, and the rotational speed range at which a fluid delivery through the installation is not to be expected according to this determined pipe network characteristic curve, is blocked in the control/closed-loop control of the pump.

3. A method according to one of the preceding claims, **characterised in that** the prevailing operating point of the pump is determined before and after carrying out the method, and the operating points are compared before and after the method and that the method is repeated given a deviation of the operating points.

4. A method according to one of the preceding claims, **characterised in that** it is effected automatically, preferably in a time-controlled manner, after switching on the assembly.

5. A method according to one of the preceding claims, **characterised in that** it is started by way of external intervention.

6. An electromotorically driven pump with control and regulation electronics, **characterised in that** the control and regulation electronics are designed such that the pump, for determining a throughput block, is activated according to a method according to one of the preceding claims and that the rotational speed range in which no throughput is ascertained or is to be expected, is automatically blocked in the control/closed-loop control of the pump.

7. A pump according to claim 6, **characterised in that** the control and regulation electronics are designed such that the pump, for determining a throughput block, is activated with a rotational speed rising from close to zero or dropping to close to zero, and that one simultaneously determines whether a throughput is effected or not, and that the rotational speed range, in which no throughput is ascertained, is automatically blocked in the control/closed-loop control.

8. A pump according to claim 6, **characterised in that** the control and regulation electronics are designed such that the pump, for determining a throughput block, is successively activated with at least two rotational speeds which are different from zero, and that a pipe network characteristic curve of the installation is determined by way of the operating points which set in at the respective rotational speed and which are determined by the delivery pressure and the delivery quantity, whereupon the presence of a throughput block is determined by way of the course of the pipe network characteristic curve, and the rotational speed range at which a fluid delivery through the installation is not to be expected according to this a determined pipe network characteristic curve, is blocked in the control/closed-loop control of the pump.

## Revendications

1. Procédé de commande d'une pompe à vitesse réglable, dans lequel la pompe est commandée à une vitesse augmentant à partir d'une valeur proche de zéro ou égale à zéro, ou diminuant jusqu'à une valeur proche de zéro ou égale à zéro et dans lequel est déterminé simultanément l'écoulement ou non d'un fluide, et dans lequel la plage de vitesse dans laquelle aucun écoulement n'est constaté, est bloquée par la commande/régulation de la pompe.

2. Procédé de commande d'une pompe à vitesse réglable, dans lequel la pompe est successivement commandée à au moins deux vitesses différentes de zéro et dans lequel, sur la base des points de fonctionnement s'établissant à la vitesse respective et définis par la pression de refoulement et le débit, est déterminée une courbe caractéristique du réseau de l'installation, puis, en fonction du cours de la courbe caractéristique du réseau de l'installation, est déterminée l'existence d'un arrêt d'écoulement, et la plage de vitesse à laquelle, en fonction de cette courbe caractéristique du réseau de l'installation déterminée, une circulation de fluide à travers l'installation n'est pas à prévoir, est bloquée par la commande/régulation de la pompe.

3. Procédé selon l'une des revendications précédentes, **caractérisé en ce que** le point de fonctionnement réel de la pompe est déterminé avant et après exécution du procédé et les points de fonctionnement sont comparés avant et après le procédé, et **en ce qu'**en cas d'écart entre les points de fonctionnement, le procédé est réitéré.

4. Procédé selon l'une des revendications précédentes, **caractérisé en ce qu'**il est réalisé automatiquement, de préférence commandé en fonction du temps, après la mise en circuit du groupe motopompe.

5. Procédé selon l'une des revendications précédentes, **caractérisé en ce qu'**il est démarré par intervention externe.

6. Pompe commandée par moteur électrique et dotée d'un dispositif électronique de commande et de régulation, **caractérisée en ce que** le dispositif électronique de commande et de régulation est conçu de telle façon que la pompe est commandée pour déterminer un arrêt d'écoulement selon un procédé défini dans l'une des revendications précédentes et **en ce que** la plage de vitesse dans laquelle aucun écoulement n'est constaté ou à prévoir est bloquée automatiquement par la commande/régulation de la pompe.

7. Pompe selon la revendication 6, **caractérisée en ce que** le dispositif électronique de commande et de régulation est conçu de telle façon que la pompe est commandée, pour déterminer un arrêt d'écoulement, à une vitesse augmentant à partir d'une valeur proche de zéro ou diminuant jusqu'à une valeur proche de zéro et **en ce qu'**est déterminé simultanément l'écoulement ou non d'un fluide, et **en ce que** la plage de vitesse dans laquelle aucun écoulement n'est constaté est bloquée automatiquement par la commande/régulation de la pompe.

8. Pompe selon la revendication 6, **caractérisée en ce que** le dispositif électronique de commande et de régulation est conçu de telle façon que la pompe est successivement commandée à au moins deux vitesses différentes de zéro pour déterminer un arrêt d'écoulement, et **en ce que**, sur la base des points de fonctionnement s'établissant à la vitesse respective et définis par la pression de refoulement et le débit, est déterminée une courbe caractéristique du réseau de l'installation, puis, en fonction du cours de la courbe caractéristique du réseau de l'installation, est déterminée l'existence d'un arrêt d'écoulement, et la plage de vitesse dans laquelle, en fonction de cette courbe caractéristique du réseau de l'installation déterminée, une circulation de fluide à travers l'installation n'est pas à prévoir, est bloquée par la commande/régulation de la pompe.
